# EUROPEAN PATENT SPECIFICATION

(11) **EP 2 452 136 B1**
(45) Date of publication and mention of the grant of the patent: **14.11.2018**
(21) Application number: 10797375.2
(22) Date of filing: 18.06.2010
(51) Int. Cl.: F24T 10/13

(54) **DEVICE AND METHOD FOR ENERGY WELL**
VORRICHTUNG UND VERFAHREN FÜR ENERGIEBOHRUNGEN
DISPOSITIF ET PROCÉDÉ POUR PUITS D'ÉNERGIE

(30) Priority: 06.07.2009 SE 0950528
(43) Date of publication of application: 16.05.2012
(73) Proprietor: EnergyBooster AB, 663 40 Hammarö (SE)
(72) Inventor: KHARSEH, Mohamad, S-977 51 Luleå (SE); OSSIANSSON, Willy, S-633 40 Hammarö (SE)
(74) Representative: Örtenblad, Johan Tore
(86) International application number: PCT/SE2010/050697
(87) International publication number: WO 2011/005168

(56) References cited:
- DE-A1-102007 033 436
- JP-A- 2005 090 902
- JP-A- 2005 337 590
- SE-C2- 530 593
- SE-L- 0 701 840
- SE-L- 8 602 579
- US-A1- 2007 000 841

## Description

The present invention relates to a method and a device for heating and cooling. More precisely, the invention relates to a method and a device for improving the efficiency of holes in energy storages, for example drilled holes intended for geothermal heating and/or cooling. Holes intended for extraction of heat and/or coldness from a surrounding material is in the following denoted "energy wells".

Nowadays, it is common to extract heat and/or coldness from the ground by heat exchanging thermal energy between the ground and a heat carrier, streaming through a conduit system, for instance comprising a collector tube arranged in an energy well in the ground, to thereafter emit its heat or coldness, via a heat pump or the like, for example to a property.

A problem is that the efficiency of many such energy wells used for geothermal heating and/or cooling is limited, since the well is often filled with subsoil water, and since the transfer of the thermal energy between the ground and the heat carrier therefore is substantially limited by the thermal conductivity of the water. Moreover, single-sided use only for either heating or cooling will in the long run lead to cooling or heating, respectively, of the ground around the well, and therefore to reduced efficiency.

At the same time, high concentrations of energy wells are becoming more commonplace in certain areas, such as for example in residential districts, which contributes to a general effect on the ground temperature in such areas. This also leads to lower efficiency for energy wells.

One solution to these problems is to drill new, more or deeper wells, which unfortunately is expensive.

In order to increase efficiency, one can furthermore increase the temperature difference between the heat carrier and the ground, but this leads, among other things, to greater difficulties in taking care of the extracted heat or coldness, possibly using a heat pump, if any.

Thus, it would be desirable to increase efficiency during extraction of heat or coldness from an energy well, without having to alter the design of the well as such.

The Swedish patent no. 0701840 describes a method and a device for increasing the efficiency in liquid-filled energy wells, whereby the liquid in the well by aid of a pump device is caused to circulate so that an increased amount of thermal energy is caused to be transferred between the material around the well and a heat carrier by convection in the liquid.

However, the application of such a method is made difficult by the fact that expensive auxiliary equipment is needed, such as a compressor or a pump.

The present invention achieves a simpler and cheaper way to increase the efficiency in energy wells.

Thus, the invention relates to a method for increasing efficiency during heating or cooling using an energy well intended for extraction of heat and/or cold from a surrounding material in the form of an elongated hole the bottom of which is arranged at a greater depth than its opening, where a cooling agent streams through the well in a collector conduit and is heat exchanged against the material surrounding the well, wherein a tube runs down into the energy well from above its opening and down along the energy well towards its bottom, the end of the tube facing towards the bottom of the energy well is open, liquid is supplied through the tube so that the liquid thereby streams down and out into the energy well through the open end of the tube, gas bubbles are supplied to the liquid streaming down through the tube, and the added gas bubbles are so small so that they rise more slowly in the liquid than the velocity of the liquid at the supply point.

The liquid is supplied in the energy well below the level for a liquid surface in the energy well, so that the gas bubbles, when they turn back up and rise in the energy well towards said liquid surface, because of the decreasing liquid pressure have time to grow so much so that they contribute to increased convection inside the energy well between the inner wall of the energy well and the collector conduit.

The invention also relates to a device of the type and with the main features according to claim 9.

In the following, the invention will be described in detail, with reference to exemplifying embodiments of the invention and to the appended drawings, of which:
Figures 1a and 2a are overview cross-sectional views from the side of an energy well with a vertical wall and a vertical wall with fastening means, respectively;
Figures 1b and 2b, respectively, show the energy well as illustrated in figure 1a and 2a, respectively, in cross-section from below;
Figure 3 is an overview cross-sectional view from the side of an energy well with a supply conduit for liquid/gas mixture;
Figures 4-5 are overview cross-sectional views from below of an energy well with a vertical wall and one and two, respectively, supply conduits for liquid/gas mixture; and
Figures 6-7 are detail views from the side of the lower part of a supply conduit for liquid/gas mixture in an energy well.

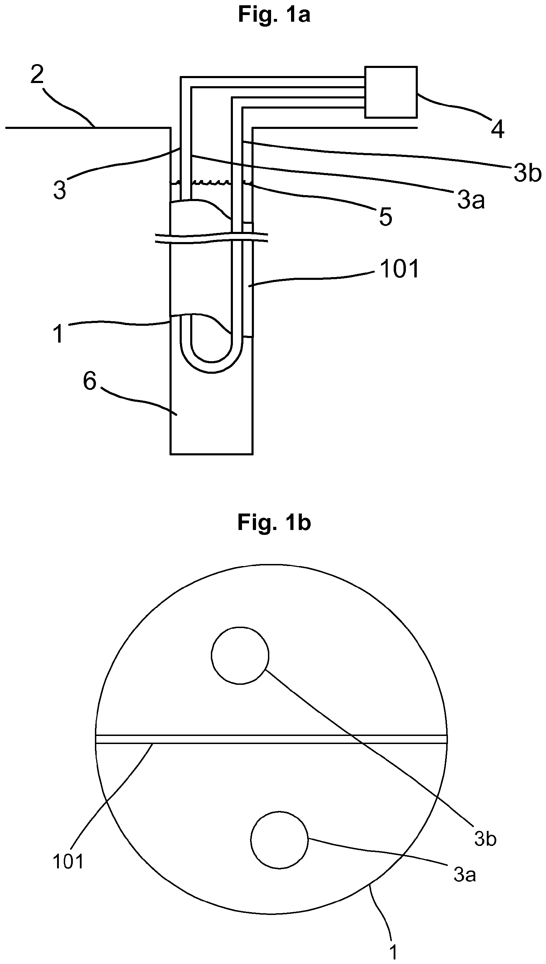

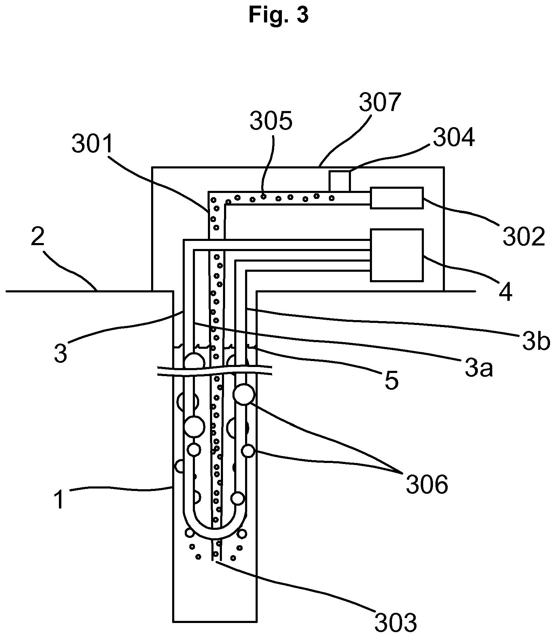

It is noted that Figures 1a-2b show energy wells that constitute background information useful when applying the present invention, which is illustrated in Figures 3-7.

As is shown in figure 1a, there is a hole 1 arranged in the ground 2. The hole 1 is an energy well, and can be a drilled hole or arranged in another way, depending on the purpose with the application of the invention, the character of the ground and other circumstances. Moreover, it is realized that the present invention can be applied to an already existing energy well, which can already be in operation, as well as during the establishment of a new energy well.

The hole 1 is at least partly filled with a liquid 6, for example because of subsoil water penetrating into the hole 1. The liquid level in the hole 1 can depend on various parameters, such as occurrence of subsoil water and/or supply of liquid by a method according to the present invention. See below for a more detailed discussion regarding such supply.

Through the hole 1, a cooling agent is caused to stream, via a system of conduits 3. The conduit system 3 is preferably arranged so that the cooling agent is kept isolated from the liquid in the hole 1, i.e. so that the cooling agent does not come into direct contact with the liquid in the hole 1. The conduit system 3 extends at least partly below the liquid surface 5 present in the hole 1, and the cooling agent is arranged to absorb or emit thermal energy from or to the liquid, depending on the mode of operation. Furthermore, the conduit system 3 is connected to a suitable liquid circulation device 4 for making use of the thermal energy obtained from the liquid, alternatively the coldness obtained, depending on the mode of operation. That "the obtained coldness is made use of" thus implies that thermal energy is transferred from the device 4 to the liquid. The device 4 may for example be a heat pump, a heat exchanger, etc.

According to a preferred embodiment, the conduit system 3 comprises a collector tube, which is conventional as such and which runs down 3a into the hole 1 and again up 3b to the ground 2 surface.

Since the liquid present in the hole 1 transfers heat or coldness from the walls of the hole 1 and its surrounding ground to the cooling agent present in the conduit system 3, coldness or heat which is stored in the ground 2 can thus be exploited, via the device 4, for example for cooling or heating a property or the like (not shown). In other words, a thermal exchange between the ground 2 and the cooling agent takes place, via the liquid in the hole 1.

Naturally, the hole 1 can have varying dimensions. A suitable type of holes 1 for application of the present invention is bore holes intended for geothermal heating or cooling, the diameter of which is usually within the interval 110 - 140 millimeters. Additionally, the depth of the hole 1 may also vary, but a preferred depth is such that the liquid column present in the hole 1 is about 50 - 120 meters deep.

The hole 1 shown in figure 1a is arranged essentially vertically in relation to the ground 2. However, it is realized that the hole 1 may be arranged at an angle in relation to both the ground 2 as well as to the plumbline. What is important is that the bottom of the hole 1 is arranged at a greater depth than its opening.

The hole 1 is divided by a barrier in the form of a vertical wall 101. The vertical wall is preferably flexible, and is preferably manufactured from a rigid plastic material with long durability, such as for example PE, PEM or PEX.

As is shown in figure 1a, the wall 101 is arranged to extend inside the hole 1 and along the main direction of elongation of the hole 1, from a place at the side wall of the hole 1 to another, so that the wall 101 divides the hole 1 in at least two longitudinal chambers and so that the wall 101 is at least partially open in both the end facing towards the opening of the hole 1 as well as in the end facing towards the bottom of the hole 1. The upper open end is arranged below the liquid surface 5 in the hole 1. Thus, liquid can pass freely in both these ends between the two chambers formed by the division of the wall 101 of the hole 1.

Since the wall 101 extends along the hole 1, the division in different chambers takes place along the direction of elongation of the hole 1.

Preferably, the wall 101 has a width which is equal to the inner diameter of the hole 1, alternatively somewhat wider. This way, the wall 101 can be clamped in the hole 1 and thereby be held in position. Alternatively, the wall 101 may be fastened using suitable fastening means, such as attachment means against the inner wall of the hole 1, to the conduit system 3 by resting on a support means in turn resting on the bottom of the hole 1 and/or be supported by a fastening means, such as a rope or the corresponding, which is fastened at the opening of the hole 1 and in the upper end of the wall 101.

Figure 1b shows the same energy well as is illustrated in figure 1a, but in a cross-section taken perpendicularly to the direction of elongation of the hole 1. The wall 101 is shown having a straight extension from side to side in the hole 1, but it is realized that since the wall 101 preferably is flexible, it may just as well form a curve in the hole 1 in the view shown in figure 1b.

A barrier in the form of a vertical wall 101 offers a simple and cheap way of dividing the hole 1 in two elongated chambers. However, it is also possible to arrange other types of barriers, such as for instance in the form of an elongated tube, which forms an inner and an outer chamber. What is essential is to achieve a division of the liquid-filled volume of the hole 1 in at least two partly separated chambers, and that the barrier achieving the separation is open in both ends, so that liquid can pass between the chambers in both these ends. When such division has been achieved, then the liquid is caused to circulate by setting it in motion in one or several of the chambers, and thereafter stream back through another or several other chambers.

According to a preferred embodiment, the conduit system 3 runs in a first of the formed chambers in a direction from the opening of the hole 1 and downwards towards its bottom, and in a second of the formed chambers in a direction back from the bottom towards the opening. Irrespective of if the cooling agent cools or heats the material in the ground 2 around the hole 1, the temperature of the cooling agent will be different in the part 3a of the conduit system 3 going down than in the part 3b of the conduit system 3 going up. The temperature difference between the cooling agent streaming through the conduit 3a in the first chamber and the cooling agent streaming in the conduit 3b in the second chamber will therefore give rise to natural circulation in the hole 1, since the liquid in the chamber in which the cooling agent is relatively warmer will assume a higher temperature than the liquid in the second chamber, and will therefore rise, at the same time as the liquid in the chamber in which the cooling agent is relatively cooler correspondingly will sink, and since the liquid in the hole 1 can stream between the chambers through the open ends of the barrier 101.

This way, natural circulation is created of the liquid in essentially the hole or at least a large part of the liquid volume in the hole 1. Because of this circulation, the efficiency of the above described heat exchange is increased, since thermal energy via the circulation can be transferred more efficiently because of the arisen convection of the liquid in the hole 1. In other words, an increased amount of thermal energy can be transferred from the ground 2 around the hole 1 to the conduit system 3, or vice versa depending on the mode of operation.

Since this circulation arises with no external energy supply, except the transport of the cooling agent through the conduit system 3, the efficiency of the hole 1 is thereby increased in the way without appreciably increasing the cost of operation for the installation. Moreover, it is possible to install a barrier in an existing or new energy well using merely inexpensive standard components, resulting in a low installation cost.

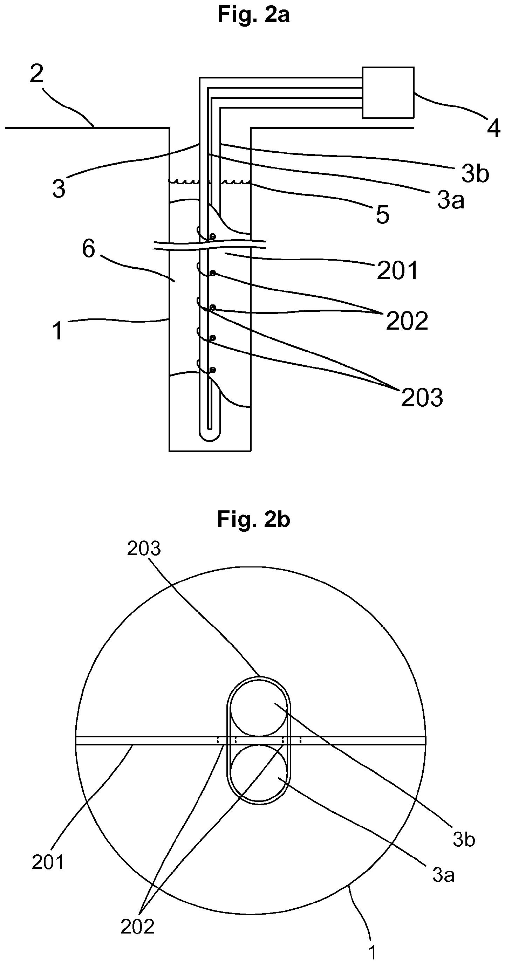

In figure 2a, a preferred embodiment of a barrier 201 is illustrated. All figures share reference numerals for corresponding parts.
Figure 2b shows the same energy well as is illustrated in figure 2a, but in cross-section taken perpendicularly to the direction of elongation of the hole 1. The wall 201 is shown with a straight extension from side to side in the hole 1, but it is realized that since the wall 201 is preferably flexible it may just as well form a curve in the hole 1 in the view shown in figure 2b.

The barrier 201 is equipped with a number of fastening means, in the form of a line of perforations 202 along the direction of elongation of the barrier 201. Through the perforations 202, attachment means 203, which are fastened around the conduit 3, are threaded. This way, the barrier 201 and the conduit 3 are held together at even intervals along the direction of extension of the barrier 201, which results in the barrier 201 being held in position in the hole 1.

According to a preferred embodiment, both the upwards going 3b and the downwards going 3a parts of the conduit system 3 are held together with the barrier 201, on each side of the barrier 201 and using the attachment means 203 running through the perforations 202 and around both the parallel running parts of the conduit system 3a, 3b, so that both conduits 3a, 3b and the barrier 201 are held together and so that the conduits 3a, 3b are held in position each on one side of the barrier 201, preferably along the main, more preferably the hole, extension of the barrier.

Such arrangement leads to a simple and inexpensive way of both holding the barrier 201 in position and ensuring that the different parts 3a, 3b of the conduit system 3 are held separated each one in a different chamber. Moreover, inexpensive manufacture, transport and installation of a system according to the present invention is thus possible, since a collector tube of suitable length can be pre-assembled on a barrier which is suited therefore, and then transported to the hole 1 in pre-assembled form. Thereby, it is possible to market a standardized assortment of pre-assembled collector tubes with barriers of various dimensions for use in different energy wells.

In figure 3, a hole 1 which is similar to that in the other figures is illustrated. Down into the hole 1, from above its opening and down into the hole 1 in a direction towards its bottom, runs a tube 301 which is open at its lower end 303. Through the tube, and therefore down into the hole 1, liquid is supplied from a source 302, which is arranged at or higher up than the opening of the hole 1. From the source 302, the liquid streams through the tube 301 and out into the hole 1 through the open lower end 303 of the tube 301.

It is realized that in order for the hole 1 not to be overfilled with liquid, it is necessary that the hole 1 is arranged with some form of drainage. According to one preferred embodiment, the liquid is water, the hole 1 is a drilled hole 1 in the ground 2, and the ground 2 is sufficiently porous so as to allow supplied liquid to be drained out from the hole 1 and away in the surrounding material. It is furthermore preferred that the groundwater level in the ground 2 is such that the hole 1 to a large part is filled with water, and that the drainage in the ground 2 is sufficiently large in relation to the supplied amount of water for the supplied water not to increase the water level 5 in the hole 1 so much so that water flows over the brim of the hole 1.

A supply device 304 for gas is arranged along the tube 301. The supply device 304 supplies gas in the form of bubbles 305 in the liquid, which are transported away with the liquid stream in the tube 301. It is preferred that the gas bubbles are supplied above the liquid surface 5 in the hole 1. Hence, from the supply point the gas bubbles are brought with the streaming liquid down through the tube 301 and out through its open end 303. In order to allow the gas bubbles to be brought down through the tube 301 this way, it is required that the added gas bubbles 305 are so small so that they will rise at a slower pace in the liquid than the velocity of the liquid at the supply point.

The lower down into the tube 301 the gas bubbles 305 are brought, the smaller they become, due to the increasing liquid pressure. At the lower, open end 303 of the tube 301, the bubbles 305 are emptied out into the hole 1, turn back upwards again and then rise in the hole 1 towards the liquid surface 5.

These rising air bubbles 306 will, because of the decreasing liquid pressure, grow as they rise towards the liquid surface 5. When near the liquid surface 5, the typical diameter of the bubbles 306 has grown so that they efficiently can contribute to increased convection inside the hole 1, between the inner wall of the hole 1 and the conduit system 3, and thereby improve efficiency of the installation.

Moreover, the supplied liquid, which additionally contributes to the streaming upwards of the liquid in the hole 1, also contributes to the turbulence in the hole 1, which additionally increases efficiency.

It has surprisingly been found that the elevation of the liquid level 5 in the hole 1 arising as liquid is supplied deep down in the hole 1 contributes to increased convection between subsoil water in the area around the hole 1 and the subsoil water present in the hole 1 at any given point in time, which also improves efficiency.

The supply of gas can be made self-regulating, since too large amounts of gas in the downwards streaming liquid will lead to the downwards transported gas bubbles merging and becoming bigger. This, in turn, increases their velocity in relation to the downwards streaming liquid, and when a certain critical amount of supplied gas is reached, gas bubbles will stand still in the supply tube 301. This will efficiently slow down the stream of liquid downwards in the supply tube 301, in turn choking the supply of gas if a venturi tube is used.

Since liquid is supplied from a point near the opening of the hole 1, the installation costs are low. Moreover, it is not necessary for the liquid to be supplied at a very high overpressure in order to be able to transport gas bubbles down through the tube 301. The present inventors have surprisingly discovered that water from a conventional communal water supply can be used, without having to achieve a higher pressure than what is already typically present in the communal water system. This brings about the advantage that an inexpensive source of liquid is at hand, especially since no load on communal sewage treatment plants results from a method according to the present invention. However, it is preferred that the liquid being supplied holds a pressure of at least 3 bars. Alternatively, the tube 301 can be connected to another source for pressurized tap water than the communal water supply, such as for example a dug well that is connected to a pump and/or a pressure vessel or the corresponding.

It is preferred that the added gas is atmospheric air. In order to avoid that the oxygen in the air attacks the walls of the hole 1, leading to oxide formation and other problems, it is preferred that a sealed cover 307 is arranged above the liquid surface 5 in the hole 1 and that the added gas is air taken from the space between the liquid surface 5 in the hole 1 and the cover 307, so that this air is recirculated in the hole 1 by first being led down through the tube 301 and thereafter back through the liquid 6 in the hole 1 and back to the space below the cover 307. This way, the oxygen contents of the recirculated air, after the initial oxidation in the hole 1 has consumed a part of the oxygen which was present in the original air, will be substantially lower than those of the surrounding atmospheric air. This way, the negative effects of oxygen supply to the hole 1 will be decreased to acceptable levels.

In order to achieve such decrease of supplied oxygen, it is in general not necessary for the cover 307 to be completely gas-tight, to the contrary it is sufficient if the cover 307 is manufactured from a gas-tight material, such as metal or plastic, and is arranged to cover the hole opening, so that it lacks openings except possibly a few inspection doors or the like, which are closed during operation.

According to a very preferred embodiment, the supply device 304 comprises a venturi tube, arranged along the tube 301 at a position above the liquid surface 5 of the hole 1, through which the gas is supplied to the liquid by use of venturi action, whereby the gas is sucked into the forward streaming liquid and thereby forms bubbles of sufficiently small size.

As the liquid streams downwards through the tube 301, the total density of the liquid and the contained gas bubbles decreases, because of the gas being compressed as the pressure increases. In order to avoid that the velocity of the mixture decreases with increasing depth, so that the velocity finally becomes so low that the gas bubbles no longer can be brought downwards, it is preferred that the tube 301 is arranged with a non-constant interior cross-sectional dimension, with a shape so that the cross-sectional dimension decreases with increasing depth in the hole 1. Moreover, this decrease in cross-sectional dimension is so large that the velocity of the liquid/gas mixture is constant or increasing along the complete length of the tube 301 downwards in the hole 1.

The decrease in cross-sectional dimension can be continuous along the whole or parts of the tube 301, alternatively the tube 301 can be arranged with stepwise tapers, as long as the velocity of the liquid/gas mixture does not decrease to a value which is below the velocity at the opening of the hole 1.

In case a supply tube 301 for liquid/gas mixture is used, it is furthermore preferred that the hole 1 is divided into at least two partly separated chambers using a barrier, as described above. The barrier extends inside the hole 1 and along the main direction of elongation of the hole 1, so that the barrier is at least partly open in both its respective ends, whereby liquid can pass between the chambers in these ends.

In this case, it is furthermore preferred that the liquid/gas mixture is supplied to only one or several certain chambers, so that the gas bubbles rise towards the surface 5 only in that chamber or those certain chambers. When the gas bubbles rise, they will expand, and finally become so large so that they press the liquid upwards inside the chamber or chambers in question. This way, an upward pump action is achieved inside the chamber or chambers. Such a device, which by supplying gas inside a chamber at a certain depth and therewith achieves pump action inside the chamber, is herein denoted mammuth pump.

By such an arrangement, the liquid in the hole 1 will thus by mammuth pump action stream up through the chamber or chambers to which liquid/gas mixture has been supplied, and back down through another chamber or other chambers, to which liquid/gas mixture has not been supplied. Thereby, a circulation of the liquid in the hole 1 is created, which via convection results in more efficient heat transfer from the walls of the hole 1 to the conduit system 3 or vice versa.

According to a very preferred embodiment, the conduit system 3 comprises a collector tube, running through a certain chamber on its way down through the hole 1 from its opening, and through a certain other chamber on its way back up again to the opening of the hole 1, at the same time as liquid/gas mixture is supplied only to chambers through which cooling agent presently is led through the collector tube down into the hole 1 from the opening of the hole 1. This way, a countercurrent flow action is achieved similar to the one in a heat exchanger of countercurrent flow type. This yields a very efficient transfer of thermal energy in the hole 1, irrespectively of if the installation is operated for heating or for cooling of the cooling agent in the collector tube.

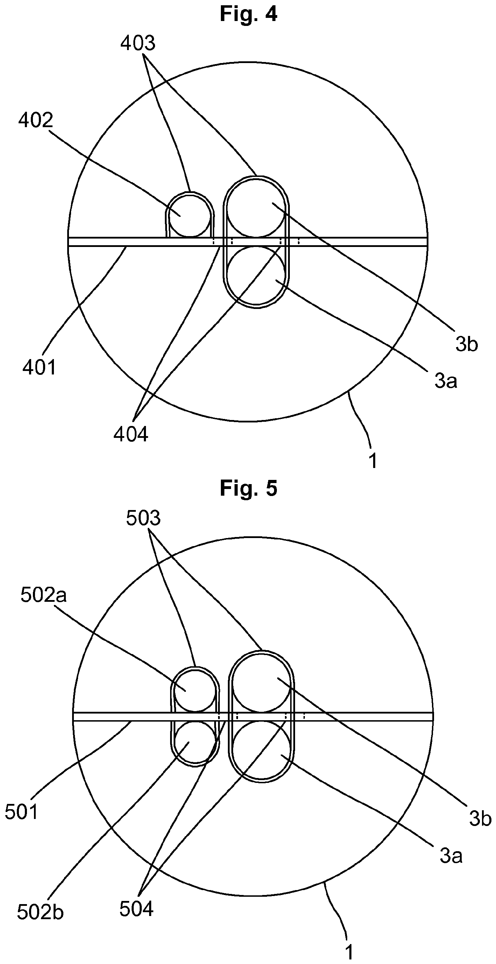

Figure 4 illustrates, in cross-section taken perpendicularly to the direction of elongation of the hole 1, a barrier 401 which is similar to the above described barriers 101, 201. In a way which is similar to the one described in connection to figure 2a, both respective upwards 3b and downwards 3a running parts of the collector tube 3 are fastened on one side each of the barrier 401 using fastening means comprising perforations 404 and attachment means 403. In addition, a supply tube 402 for liquid/gas mixture is fastened on one side of the barrier 401 using the same or other attachment means 403. Preferably, the supply tube 402 is held together with both the two parts of the tube 3 and the barrier 401 along the complete elongation of the barrier 401. Such a construction is robust but still simple and inexpensive.

Figure 5, being similar to figure 4, illustrates a preferred embodiment to achieve that liquid/gas mixture is only supplied to the chamber through which cooling agent presently is led through the collector tube 3 down into the hole 1 from the opening of the hole 1. More than one supply tube 502a, 502b for liquid/gas mixture are arranged in the hole 1, which supply tubes 502a, 502b by aid of fastening means 503, 504 are fastened, and thereby run, on different sides of a barrier 501, and are arranged to open out near the bottom of the hole 1 in different chambers, alternatively in the extension of different chambers below the lower end of the barrier 501. A control device (not shown), which is conventional as such, is then arranged to direct the liquid/gas mixture only to that or those supply tubes opening out into chambers through which cooling agent is presently led through the collector tube down into the hole 1 from the opening of the hole 1. This way, countercurrent flow action can easily be achieved in the hole 1, even in the event of a switch of mode of operation from heating to cooling and vice versa.

According to an alternative embodiment, a valve device (not shown), which is conventional as such, is arranged below the barrier 401 in the hole 1, to which valve device the supply tube 3 for liquid/gas mixture is connected. A control device (not shown) that is conventional as such is then arranged to control the valve device so that the latter directs the supply of liquid/gas mixture only to that chamber or those chambers through which cooling agent presently is led through the collector tube downwards in the hole 1 from the opening of the hole 1. Such a solution does certainly require the valve device to be arranged at a certain depth in the hole 1, but on the other hand only demand one single supply tube 3 for liquid/gas mixture is required.

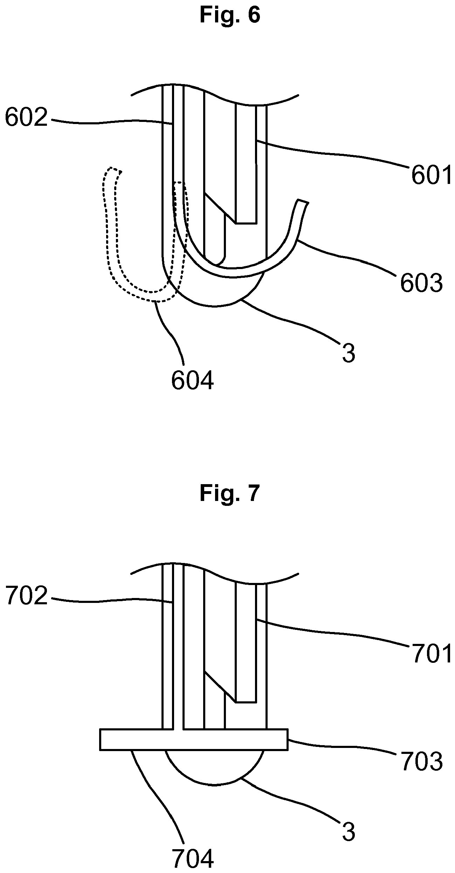

In case a barrier divides the hole 1 in two or more longitudinal chambers, and if a collector tube is arranged in different chambers in the downwards and upwards directions, respectively, as described above, according to an alternative preferred embodiment, illustrated in figure 6, the supply tube 602 for liquid/gas mixture is arranged to run along one of the chambers, possibly held together by a barrier 601 as described above, and to open out into the hole 1 at the lower end of the barrier 601. Moreover, a distribution device is arranged to direct the flow of liquid/gas mixture that is supplied through the tube 602 to the chamber in which the cooling agent is relatively warmer, so that the natural circulation which arises due to the arrangement with the collector tube 3 in two different chambers is amplified by mammuth pump action in the relatively warmer chamber. In other words, the supplied gas bubbles will be caused to rise in the chamber in which the cooling agent in the collector tube 3 is relatively warmer than in the other chamber in which the collector tube 3 also runs, and will additionally contribute to the fact that the liquid in this chamber rises towards the liquid surface 5 of the hole 1. Thereby, the already existing natural circulation in the hole 1 is amplified, yielding heavier convection and thereby improved efficiency.

In figure 6, the distribution device is a flexible, free end 603 of the supply tube 602 for liquid/gas mixture. Since the free end 603 is flexible, it will swing as a consequence of the motion of the naturally circulating liquid in the hole 1, so that the opening of the supply tube ends up in the relatively warmer chamber. This is illustrated by reference numbers 603 and 604, respectively, that show the free end in two possible positions. In this case, it is preferred that liquid/gas mixture is supplied with the purpose of creating mammuth pump action in the relatively warmer chamber only once the natural circulation has commenced in the hole 1. Such an arrangement is inexpensive and reliable.

Figure 7 illustrates an alternative embodiment, in which the distribution device is a horizontal tube with open ends 703, 704, where each end is arranged in a respective chamber or in the extended elongation of a respective chamber. When natural circulation already is present in the hole 1, the main part of the liquid/gas mixture that is supplied through a supply tube 702, running down to below a barrier 701, will stream out through the one of the open ends 703, 704 opening out into the warmer chamber. Such an arrangement lacks moving parts, and is therefore reliable.

Depending on the purpose of the invention and the mode of operation, one can thus provide mammuth pump action only in one or some of the chambers in the hole 1 in order either to create countercurrent flow via active control in accordance with for example that described above in connection to figure 5, and/or to amplify the natural circulation by means of a passive control of the type described above in connection to figure 6 or figure 7.

According to a preferred mode of operation, the installation in which the conduit system 3 and the energy well 1 constitute parts is dimensioned for extraction of heat and/or coldness under operating conditions which are less demanding than the maximally demanding operating conditions for which the installation must be dimensioned for the current use. In other words, the installation does not in its basic execution have the necessary performance to for example manage to sufficiently heat a house during heavy cold, or to cool a house when it is very warm outside in combination with many people staying in the house. In order to manage such peaks, a supply tube for liquid/gas mixture in accordance with the above described is arranged for temporary use in order to increase performance in the installation, so that it can manage the said maximally demanding operating conditions. This means that no mammuth pump action is achieved during normal operation, but only during heating and/or cooling peaks. This way, a substantially less expensive installation can be made and supplemented with a device according to the present invention so that the maximum performance is still sufficient for the current operating task.

Thus, the present invention inexpensively achieves an increased efficiency for extraction of heat and/or coldness from energy wells. Especially, this is achieved with a minimum of auxiliary equipment and externally supplied energy. Moreover, the efficiency increase is achieved with comparatively simple and inexpensive standard components, and without having to influence the design of the well as such. However, the achieved efficiency increase can of course also be used for new installations of energy wells, whereby these for example can be made less deep than what would otherwise have been the case.
Above, preferred embodiments have been described. However, it will be apparent to the skilled person that many modifications can be made to the described embodiments without departing from the idea of the invention. Thus, the invention is not limited to the described embodiments, but rather is variable within the scope of the enclosed claims.

## Claims

1. Method for increasing the efficiency during heating or cooling using an at least partly liquid filled energy well (1) intended for extraction of heat and/ or cold from a surrounding material in the form of an elongated hole the bottom of which is arranged at a greater depth than its opening, where a cooling agent is caused to stream through the well (1) in a collector conduit (3), and by heat exchange to extract heat or coldness from the material surrounding the well (1), wherein a tube (301;402;502a;502b) is caused to run down into the energy well (1) from above its opening and down along the energy well (1) towards its bottom, in that the end (303) of the tube (301;402;502a;502b) facing towards the bottom of the energy well (1) is caused to be open, **characterised in that** a liquid is caused to be supplied through the tube (301;402;502a;502b) so that liquid thereby is caused to stream down and out into the energy well (1) through the open end (303) of the tube (301;402;502a;502b), **in that** gas bubbles (305) are supplied to the liquid streaming down through the tube (301;402;502a;502b), **in that** the supplied gas bubbles (305) are caused to be so small so that they rise more slowly in the supplied liquid than the velocity of this liquid at the supply point, and **in that** the liquid is supplied in the energy well (1) below the level for a liquid surface (5) in the energy well (1), so that the gas bubbles (305), when they turn back up and rise in the energy well (1) towards said liquid surface (5), because of the decreasing liquid pressure have time to grow so much so that they contribute to increased convection inside the energy well (1), between the inner wall of the energy well (1) and the collector conduit (3).

2. Method according to claim 1, **characterised in that** the well (1) is caused to be a drilled hole in the ground (2) intended for geothermal heating and/or cooling.

3. Method according to claim 1 or 2, **characterised in that** the supplied liquid is caused to be comprised by water from a communal water supply.

4. Method according to any one of the preceding claims, **characterised in that** the gas in the supplied gas bubbles is caused to be atmospheric air.

5. Method according to any one of claims 1-3, **characterised in that** a sealed cover (307) is caused to be arranged above the liquid surface (5) in the energy well (1), and **in that** the gas in the supplied gas bubbles is caused to be air taken from the space between the liquid surface (5) in the energy well (1) and the cover (307) and is thereby recirculated in the energy well (1).

6. Method according to any one of the preceding claims, **characterised in that** the liquid is caused to be supplied under a pressure of at least 3 bars.

7. Method according to any one of the preceding claims, **characterised in that** the gas that is to form the gas bubbles is caused to be supplied via a venturi tube arranged along the tube (301;402;502a;502b) at a point above the liquid surface (5) of the energy well (1).

8. Method according to any one of the preceding claims, **characterised in that** the tube (301;402;502a;502b) is caused to be arranged with a non-constant interior cross-sectional dimension, with a shape so that the cross-sectional dimension decreases with increasing depth in the energy well (1), whereby the decrease in cross-sectional dimension is caused to be so large so that the velocity of the liquid/gas mixture, the volume per weight unit of which decreases with increasing depth in the energy well (1), is constant or increasing along the whole length of the tube (301;402;502a;502b) .

9. Device for increasing the efficiency during heating or cooling comprising an at least partly liquid filled energy well (1) intended for extraction of heat and/ or cold from a surrounding material in the form of an elongated hole the bottom of which is arranged at a greater depth than its opening, which device further comprises a liquid circulating device (4) arranged to circulate a cooling agent through the well (1) in a collector conduit (3) of the device, and by heat exchange to extract heat or coldness from the material surrounding the well (1), wherein the device comprises a tube (301;402;502a;502b) arranged to run down into the energy well (1) from above its opening and down along the energy well (1) towards its bottom, in that the end (303) of the tube (301; 402; 502a; 502b) facing towards the bottom of the energy well (1) is open, **characterised in that** the device comprises a source (302) arranged to supply a liquid through the tube (301;402;502a;502b) so that liquid thereby streams down and out into the energy well (1) through the open end (303) of the tube (301;402;502a;502b), **in that** the device comprises a supply device for gas (304) arranged to supply gas bubbles (305) to the liquid streaming down through the tube (301;402;502a;502b), **in that** the supplied gas bubbles (305) are so small so that they rise more slowly in the supplied liquid than the velocity of this liquid at the supply point, and **in that** the tube (301;402;502a;502b) is arranged to supply the liquid in the energy well (1) below the level for a liquid surface (5) in the energy well (1), so that the gas bubbles (305), when they turn back up and rise in the energy well (1) towards said liquid surface (5), because of the decreasing liquid pressure have time to grow so much so that they contribute to increased convection inside the energy well (1), between the inner wall of the energy well (1) and the collector conduit (3).

10. Device according to claim 9, **characterised in that** the well (1) is a drilled hole in the ground (2) intended for geothermal heating and/or cooling.

11. Device according to claim 9 or 10, **characterised in that** the gas in the supplied gas bubbles is atmospheric air.

12. Device according to any one of claims 9-11, **characterised in that** the device comprises a sealed covering (307) arranged above the liquid surface (5) in the energy well (1), and **in that** the gas in the supplied gas bubbles is air taken from the space between the liquid surface (5) in the energy well (1) and the covering (307), and is thereby recirculated in the energy well (1).

13. Device according to any one of claims 9-12, **characterised in that** the source (302) is arranged to supply the liquid under a pressure of at least 3 bars.

14. Device according to any one of claims 9-13, **characterised in that** the supply device for gas (304) is arranged to supply the gas which is to form the gas bubbles via a venturi tube arranged along the tube (301;402;502a;502b) at a point above the liquid surface (5) of the energy well (1).

15. Device according to any one of claims 9-14, **characterised in that** the tube (301; 402; 502a; 502b) is arranged with a non-constant interior cross-sectional dimension, with a shape so that the cross-sectional dimension decreases with increasing depth in the energy well (1), whereby the decrease in cross-sectional dimension is so large so that the velocity of the liquid/gas mixture, the volume per weight unit of which decreases with increasing depth in the energy well (1), is constant or increasing along the whole tube (301;402;502a;502b) .

## Patentansprüche

1. Verfahren zum Steigern der Effizienz während des Heizens oder des Kühlens unter Verwendung einer wenigstens teilweise mit Flüssigkeit gefüllten Bohrung (1), welche zur Extraktion von Wärme und/oder Kälte aus einem umgebenden Material vorgesehen ist, in Form eines länglichen Loches, dessen Boden in einer größeren Tiefe angeordnet ist, als seine Öffnung, wobei ein Kühlmittel durch die Bohrung (1) in einen Sammelkanal (3) strömt, und durch Wärmeaustausch, um Wärme oder Kälte von dem die Bohrung (1) umgebenden Material zu extrahieren, wobei ein Rohr (301; 402; 502a; 502b) nach unten in die Energiebohrung (1) von seiner oben liegenden Öffnung und nach unten entlang der Energiebohrung (1) bis zu ihrem Boden läuft, wobei das Ende (303) des Rohres (301; 402; 502a; 502b), zu dem Boden der Energiebohrung (1) zeigt, geöffnet ist, **dadurch gekennzeichnet, dass** eine Flüssigkeit durch das Rohr (301; 402; 502a; 502b) gespeist wird, so dass eine Flüssigkeit hierdurch nach unten und nach außen in die Energiebohrung (1) durch das offene Ende (303) des Rohres (301; 402; 502a, 502b) strömt, dass Gasbläschen (305) zu der Flüssigkeit, welche nach unten durch das Rohr (301; 402; 502a; 502b) strömt, zugeführt werden, dass die zugeführten Gasbläschen (305) so klein sind, dass sie in der zugeführten Flüssigkeit langsamer nach oben steigen als die Geschwindigkeit dieser Flüssigkeit an dem Lieferpunkt beträgt, und dass die Flüssigkeit in der Energiebohrung (1) unterhalb des Niveaus für eine Flüssigkeitsoberfläche (5) in der Energiebohrung (1) zugeführt wird, so dass die Gasbläschen (305), wenn sie ihre Bahn rückwärts nach oben vollführen und in der Energiebohrung (1) zu der genannten Flüssigkeitsoberfläche (5) aufsteigen, da der abnehmende Flüssigkeitsdruck Zeit hat, um so stark anzuwachsen, dass sie zu einer gesteigerten Konvektion innerhalb der Energiebohrung (1), zwischen der inneren Wand der Energiebohrung (1) und dem Sammelkanal (3) beitragen.

2. Verfahren nach Anspruch 1, **dadurch gekennzeichnet, dass** die Bohrung (1) ein in den Boden (2) gebohrtes Loch ist, welches für geothermisches Heizen und / oder Kühlen vorgesehen ist.

3. Verfahren nach einem der Ansprüche 1 oder 2, **dadurch gekennzeichnet, dass** die zugespeiste Flüssigkeit Wasser einer kommunalen Wasserversorgung ist.

4. Verfahren nach einem der vorhergehenden Ansprüche, **dadurch gekennzeichnet, dass** das Gas in den zugeführten Gasbläschen atmosphärische Luft ist.

5. Verfahren nach einem der Ansprüche 1 bis 3, **dadurch gekennzeichnet, dass** ein abgedichteter Deckel (307) über der Flüssigkeitsoberfläche (5) in der Energiebohrung (1) angeordnet ist, und dass das Gas in den zugespeisten Gasbläschen Luft ist, welche aus dem Raum zwischen der Flüssigkeitsoberfläche (5) in der Energiebohrung (1) und dem Deckel (307) genommen ist und hierdurch in der Energiebohrung (1) rezirkuliert wird.

6. Verfahren nach einem der vorhergehenden Ansprüche, **dadurch gekennzeichnet, dass** die Flüssigkeit unter einem Druck von wenigstens 3 bar zugespeist wird.

7. Verfahren nach einem der vorhergehenden Ansprüche, **dadurch gekennzeichnet, dass** das Gas, welches die Gasbläschen bilden soll, über ein Venturi-Rohr gespeist wird, welches entlang des Rohres (301; 402; 502a; 502b) an einem Punkt oberhalb der Flüssigkeitsoberfläche (5) der Energiebohrung (1) angeordnet ist.

8. Verfahren nach einem der vorhergehenden Ansprüche, **dadurch gekennzeichnet, dass** das Rohr (301; 402; 502a; 502b) mit einem nichtkonstanten inneren Querschnittsmaß angeordnet ist, in einer Form, dass das Querschnittsmaß mit zunehmender Tiefe der Energiebohrung (1) abnimmt, wodurch die Abnahme in der Querschnittsdimension so groß ist, dass die Geschwindigkeit der Flüssigkeits-/Gasmischung, das Volumen pro Gewichtseinheit, welches mit zunehmender Tiefe in der Energiebohrung (1) abnimmt, konstant ist oder entlang der gesamten Länge des Rohres (301; 402; 502a; 502b) zunimmt.

9. Vorrichtung zum Steigern der Effizienz während eines Heizens oder Kühlens mit folgenden Merkmalen:
einer wenigstens teilweise mit Flüssigkeit gefüllte Energiebohrung (1), welche für die Extraktion von Wärme und Kälte aus einem umgebenden Material vorgesehen ist, in Form eines länglichen Lochs, dessen Boden, in einer größeren Tiefe angeordnet ist, als dessen Öffnung, wobei die Vorrichtung weitere Merkmale aufweist:
eine Flüssigkeitszirkulationsvorrichtung (4), welche angeordnet ist, um ein Kühlmittel durch die Bohrung (1) in einen Sammelkanal (3) der Vorrichtung zu zirkulieren, und um durch einen Wärmetausch Wärme oder Kälte aus dem die Bohrung (1) umgebenden Material zu extrahieren, wobei
die Vorrichtung ein Rohr (301; 402; 502a; 502b) aufweist, welches angeordnet ist, um von oberhalb ihrer Öffnung nach unten in die Energiebohrung (1) und nach unten entlang der Energiebohrung (1) bis zu ihrem Boden zu verlaufen, wobei das Ende (303) des Rohres (301; 402; 502a, 502b), welches zu dem Boden der Energiebohrung (1) zeigt, geöffnet ist, **dadurch gekennzeichnet, dass**
die Vorrichtung eine Quelle (302) aufweist, welche angeordnet ist, um eine Flüssigkeit durch das Rohr (301; 402; 502a; 502b) zu speisen, so dass die Flüssigkeit hierdurch nach unten und außen in die Energiebohrung (1) durch das offene Ende (303) des Rohres (301; 402; 502a; 502b) strömt, dass die Vorrichtung eine Speisevorrichtung für Gas (304) aufweist, welche so angeordnet ist, dass sie Gasbläschen (305) zu der Flüssigkeit speist, welche nach unten durch das Rohr (301; 402; 502a; 502b) strömt, dass die zugeführten Gasbläschen (305) so klein sind, dass sie in der zugeführten Flüssigkeit langsamer aufsteigen als die Geschwindigkeit dieser Flüssigkeit am Lieferpunkt beträgt, und dass das Rohr (301; 402; 502a; 502b) angeordnet ist, um die Flüssigkeit in die Energiebohrung (1) unterhalb des Niveaus für eine Flüssigkeitsoberfläche (5) in der Energiebohrung (1) zu speisen, so dass die Gasbläschen (305), wenn sie nach oben umkehren und in der Energiebohrung (1) zu der genannten Flüssigkeitsoberfläche (5) aufsteigen, da der abnehmende Flüssigkeitsdruck Zeit hat, so viel zu wachsen, so dass sie zu einer gesteigerten Konvektion innerhalb der Energiebohrung (1), zwischen der inneren Wand der Energiebohrung (1) und dem Sammelkanal (3) beitragen.

10. Vorrichtung nach Anspruch 9, **dadurch gekennzeichnet, dass** die Bohrung (1) ein in den Boden (2) gebohrtes Loch ist, welches für geothermisches Heizen und / oder Kühlen vorgesehen ist.

11. Vorrichtung nach Anspruch 9 oder 10, **dadurch gekennzeichnet, dass** das Gas in den zugespeisten Gasbläschen atmosphärische Luft ist.

12. Vorrichtung nach einem der Ansprüche 9 bis 11, **dadurch gekennzeichnet, dass** die Vorrichtung eine abgedichtete Abdeckung (307) aufweist, welche oberhalb der Flüssigkeitsoberfläche (5) in der Energiebohrung (1) angeordnet ist, und dass das Gas in den zugespeisten Gasbläschen Luft ist, welche aus dem Raum zwischen der Flüssigkeitsoberfläche (5) in der Energiebohrung (1) und der Abdeckung (307) genommen ist, und dadurch in der Energiebohrung (1) rezirkuliert wird.

13. Vorrichtung nach einem der Ansprüche 9 bis 12, **dadurch gekennzeichnet, dass** die Quelle (302) angeordnet ist, um die Flüssigkeit unter einem Druck von wenigstens 3 bar zuzuspeisen.

14. Vorrichtung nach einem der Ansprüche 9 bis 13, **dadurch gekennzeichnet, dass** die Liefervorrichtung für Gas (304) so angeordnet ist, um das Gas, welches die Gasbläschen bilden soll, über ein Venturi-Rohr, welches entlang des Rohres (301; 402; 502a; 502b) angeordnet ist, an einem Punkt oberhalb der Flüssigkeitsoberfläche (5) der Energiebohrung (1) zu liefern.

15. Vorrichtung nach einem der Ansprüche 9 bis 14, **dadurch gekennzeichnet, dass** das Rohr (301; 402; 502a; 502b) mit einem nichtkonstanten inneren Querschnittsmaß, mit einer Form, dass das Querschnittsmaß mit zunehmender Tiefe in der Energiebohrung (1) abnimmt angeordnet ist, wodurch die Abnahme in dem Querschnittsmaß so groß ist, dass die Geschwindigkeit der Flüssigkeits-/Gasmischung, die Volumen-pro-Gewicht-Einheit, welche mit zunehmender Tiefe in der Energiebohrung (1) abnimmt, konstant ist oder entlang des gesamten Rohres (301; 402; 502a; 502b) zunimmt.

## Revendications

1. Procédé destiné à augmenter l'efficacité pendant le chauffage ou le refroidissement, utilisant un puits énergétique (1) rempli au moins en partie avec un liquide destiné à extraire de la chaleur et/ ou du froid d'un matériau avoisinant sous la forme d'un trou allongé dont le fond est agencé à une plus grande profondeur que son ouverture, où un agent de refroidissement est amené à s'écouler à travers le puits (1) dans un conduit de collecteur (3), et grâce à un échange de chaleur à extraire de la chaleur ou du froid à partir du matériau avoisinant le puits (1), dans lequel un tube (301 ; 402 ; 502a ; 502b) est amené à s'étendre vers le bas à l'intérieur du puits énergétique (1) à partir du dessus de son ouverture et vers le bas tout le long du puits énergétique (1) vers son fond, en ce que l'extrémité (303) du tube (301 ; 402 ; 502a ; 502b) faisant face vers le fond du puits énergétique (1) est amenée à être ouverte, **caractérisé en ce qu'**un liquide est amené à être alimenté à travers le tube (301 ; 402 ; 502a ; 502b) de sorte que le liquide soit entraîné ainsi à s'écouler vers le bas et à l'extérieur à l'intérieur du puits énergétique (1) à travers l'extrémité ouverte (303) du tube (301 ; 402 ; 502a ; 502b), **en ce que** des bulles de gaz (305) sont fournies au liquide s'écoulant vers le bas à travers le tube (301 ; 402 ; 502a ; 502b), **en ce que** les bulles de gaz fournies (305) sont amenées à être si petites de telle sorte qu'elles s'élèvent plus lentement dans le liquide fourni que la vitesse de ce liquide au point d'alimentation, et **en ce que** le liquide est fourni dans le puits énergétique (1) au-dessous du niveau pour une surface de liquide (5) dans le puits énergétique (1), de telle sorte qu'au moment où les bulles de gaz (305) retournent et remontent dans le puits énergétique (1), vers ladite surface de liquide (5), celles-ci ont suffisamment le temps, en raison de la pression décroissante du liquide, de croître tellement qu'elles contribuent à une convexion améliorée à l'intérieur du puits énergétique (1), entre la paroi interne du puits énergétique (1) et le conduit de collecteur (3).

2. Procédé selon la revendication 1, **caractérisé en ce que** le puits (1) est amené à être un trou foré dans le sol (2) destiné à un chauffage et/ ou à un refroidissement géothermique.

3. Procédé selon la revendication 1 ou 2, **caractérisé en ce que** le liquide fourni est amené à être constitué d'eau provenant d'une source d'alimentation d'eau collective.

4. Procédé selon l'une quelconque des revendications précédentes, **caractérisé en ce que** le gaz dans les bulles de gaz fournies est de l'air atmosphérique.

5. Procédé selon l'une quelconque des revendications 1 à 3, **caractérisé en ce qu'**un couvercle étanche (307) est amené à être agencé au-dessus de la surface de liquide (5) dans le puits énergétique (1), et **en ce que** le gaz dans les bulles de gaz fournies est amené à être de l'air pris de l'espace entre la surface de liquide (5) dans le puits énergétique (1) et le couvercle (307) et est de ce fait remis en circulation dans le puits énergétique (1).

6. Procédé selon l'une quelconque des revendications précédentes, **caractérisé en ce que** le liquide est amené à être fourni sous une pression d'au moins 3 bars.

7. Procédé selon l'une quelconque des revendications précédentes, **caractérisé en ce que** le gaz qui est destiné à former les bulles de gaz est amené à être fourni par l'intermédiaire d'un tube venturi agencé le long du tube (301 ; 402 ; 502a ; 502b) à un point au-dessus de la surface de liquide (5) du puits énergétique (1).

8. Procédé selon l'une quelconque des revendications précédentes, **caractérisé en ce que** le tube (301 ; 402 ; 502a ; 502b) est amené à être agencé avec une dimension en coupe transversale intérieure non constante, avec une forme telle que la dimension en coupe transversale diminue au fur et à mesure que la profondeur dans le puits augmente (1), moyennant quoi la réduction de la dimension de la coupe transversale est amenée à être si importante que la vitesse du mélange liquide/gaz, dont le volume par unité de poids diminue au fur et à mesure que la profondeur dans le puits énergétique (1) augmente, est constante ou croissante le long de l'ensemble de la longueur du tube (301 ; 402 ; 502a ; 502b).

9. Dispositif destiné à augmenter l'efficacité pendant le chauffage ou le refroidissement, comprenant un puits énergétique (1) rempli au moins en partie avec un liquide destiné à extraire de la chaleur et/ ou du froid d'un matériau avoisinant sous la forme d'un trou allongé dont le fond est agencé à une plus grande profondeur que son ouverture, lequel dispositif comprend en outre un dispositif de circulation (4) agencé pour faire circuler un agent de refroidissement à travers le puits (1) dans un conduit de collecteur (3) du dispositif, et grâce à un échange de chaleur extraire de la chaleur ou du froid à partir du matériau avoisinant le puits (1), dans lequel le dispositif comprend un tube (301 ; 402 ; 502a ; 502b) agencé pour s'étendre vers le bas à l'intérieur du puits énergétique (1) à partir du dessus de son ouverture et vers le bas le long du puits énergétique (1) vers son fond, l'extrémité (303) du tube (301 ; 402 ; 502a ; 502b) faisant face au fond du puits énergétique (1) étant ouverte, **caractérisé en ce que** le dispositif comprend une source (302) agencée pour fournir un liquide à travers le tube (301 ; 402 ; 502a ; 502b) de sorte que le liquide s'écoule vers le bas et sort à l'intérieur du puits énergétique (1) à travers l'extrémité ouverte (303) du tube (301 ; 402 ; 502a ; 502b), **en ce que** le dispositif comprend un dispositif d'alimentation de gaz (304) agencé pour fournir des bulles de gaz (305) au liquide s'écoulant vers le bas à travers le tube (301 ; 402 ; 502a ; 502b), **en ce que** les bulles de gaz fournies (305) sont si petites qu'elles s'élèvent plus lentement dans le liquide fourni que la vitesse de ce liquide au point d'alimentation, et **en ce que** le tube (301 ; 402 ; 502a; 502b) est agencé pour fournir le liquide dans le puits énergétique (1) au-dessous du niveau pour une surface de liquide (5) dans le puits énergétique (1), de telle sorte qu'au moment où les bulles de gaz (305) retournent et remontent dans le puits énergétique (1), vers ladite surface de liquide (5), celles-ci ont suffisamment le temps, en raison de la pression décroissante du liquide, de croître tellement qu'elles contribuent à une convexion améliorée à l'intérieur du puits énergétique (1), entre la paroi interne du puits énergétique (1) et le conduit de collecteur (3).

10. Dispositif selon la revendication 9, **caractérisé en ce que** le puits (1) est un trou foré dans le sol (2) destiné à un chauffage et/ ou à un refroidissement géothermique.

11. Dispositif selon la revendication 9 ou 10, **caractérisé en ce que** le gaz dans les bulles de gaz fournies est de l'air atmosphérique.

12. Dispositif selon l'une quelconque des revendications 9 à 11, **caractérisé en ce que** le dispositif comprend un couvercle étanche (307) agencé au-dessus de la surface de liquide (5) dans le puits énergétique (1), et **en ce que** le gaz dans les bulles de gaz fournies est de l'air pris de l'espace entre la surface de liquide (5) dans le puits énergétique (1) et le couvercle (307) et est de ce fait remis en circulation dans le puits énergétique (1).

13. Dispositif selon l'une quelconque des revendications 9 à 12, **caractérisé en ce que** la source (302) est agencée pour fournir le liquide sous une pression d'au moins 3 bars.

14. Dispositif selon l'une quelconque des revendications 9 à 13, **caractérisé en ce que** le dispositif d'alimentation pour le gaz (304) est agencé pour fournir le gaz qui est destiné à former les bulles de gaz par l'intermédiaire d'un tube venturi agencé le long du tube (301 ; 402 ; 502a ; 502b) à un point au-dessus de la surface de liquide (5) du puits énergétique (1).

15. Dispositif selon l'une quelconque des revendications 9 à 14, **caractérisé en ce que** le tube (301 ; 402 ; 502a ; 502b) est agencé avec une dimension en coupe transversale intérieure non constante, avec une forme telle que la dimension en coupe transversale diminue au fur et à mesure que la profondeur dans le puits augmente (1), moyennant quoi la réduction de la dimension de la coupe transversale est si importante que la vitesse du mélange liquide/gaz, dont le volume par unité de poids diminue au fur et à mesure que la profondeur dans le puits énergétique (1) augmente, est constante ou croissante le long de l'ensemble de la longueur du tube (301 ; 402 ; 502a ; 502b).
